# EUROPÄISCHE PATENTSCHRIFT

(11) **EP 3 459 148 B1**
(45) Veröffentlichungstag und Bekanntmachung des Hinweises auf die Patenterteilung: **05.05.2021**
(21) Anmeldenummer: 17712481.5
(22) Anmeldetag: 21.03.2017
(51) Int. Cl.: H02G 3/06

(54) **AUFNAHMEVORRICHTUNG UND KABELBAUM**
RECEIVING DEVICE AND CABLE HARNESS
DISPOSITIF DE RÉCEPTION ET FAISCEAU DE CÂBLES

(30) Priorität: 17.05.2016 DE 102016109048
(43) Veröffentlichungstag der Anmeldung: 27.03.2019
(73) Patentinhaber: Schlemmer GmbH, 85586 Poing (DE)
(72) Erfinder: CHU, Van Ngoc, 85586 Poing (DE)
(74) Vertreter: Horn Kleimann Waitzhofer Patentanwälte PartG mbB
(86) Internationale Anmeldenummer: PCT/EP2017/056678
(87) Internationale Veröffentlichungsnummer: WO 2017/198365

(56) Entgegenhaltungen:
- EP-A1- 0 402 281
- EP-A1- 0 402 281
- EP-A1- 0 818 855
- EP-A1- 0 818 855
- DE-A1-102013 220 564
- DE-A1-102013 220 564
- US-A1- 2008 277 015
- US-A1- 2008 277 015

## Beschreibung

Die vorliegende Erfindung betrifft eine Aufnahmevorrichtung, insbesondere einen Verteiler, zur Aufnahme eines Schlauchs für elektrische Kabel und einen Kabelbaum mit einer derartigen Aufnahmevorrichtung.

Der Anmelderin ist betriebsintern bekannt, dass Wellschläuche zur Führung von Kabeln, Schläuchen oder Rohren eingesetzt werden können. Der Anmelderin ist betriebsintern weiter bekannt, dass ein Kabelbaum eine Vielzahl an Kabeln aufweisen kann, die durch verschiedene Wellschläuche mit unterschiedlichen Durchmessern hindurchgeführt sind. Der Kabelbaum kann weiterhin einen Verteiler aufweisen, in den beispielsweise ein erster Wellschlauch mit einem großen Durchmesser einmündet und aus dem zwei Wellschläuche mit beispielsweise kleineren Durchmessern ausmünden. Die in dem ersten Wellschlauch aufgenommenen Kabel können auf die beiden anderen Wellschläuche verteilt werden. Die Verteilung der Kabel erfolgt innerhalb des Verteilers, an dem die Wellschläuche fixiert sind. Dabei ist es gemäß betriebsinternem Stand der Technik der Anmelderin möglich, Verteiler einzusetzen, die mehrere Ausgänge mit unterschiedlichen oder gleichen Durchmessern aufweisen. An diesen Ausgängen können die Wellschläuche fixiert sein.

Die US 2008/0277015 A1 beschreibt einen Verteiler zur Aufnahme von Wellschläuchen. Der Verteiler umfasst zwei Halbschalen, die gelenkig miteinander verbunden sind.

Die EP 0 402 281 A1 zeigt ebenfalls einen Verteiler zur Aufnahme von Wellschläuchen. Auch dieser Verteiler umfasst zwei Halbschalen, die gelenkig miteinander verbunden sind.

Die EP 0 818 855 A1 beschreibt einen Verbinder, der zur Aufnahme eines Wellschlauchs geeignet ist. Der Verbinder umfasst zwei Halbschalen, die miteinander verclipst sind.

Die DE 10 2013 220 564 A1 zeigt ein Rohranschlussteil aus Kunststoff für Wellschlauchleitungen. Das Rohranschlussteil umfasst ein Gehäuse, das mindestens einen Gehäuseabschnitt mit einer Einführöffnung zum Anschluss eines Wellschlauchendes aufweist.

Vor diesem Hintergrund besteht eine Aufgabe der vorliegenden Erfindung darin, eine verbesserte Aufnahmevorrichtung zur Verfügung zu stellen.

Demgemäß wird eine Aufnahmevorrichtung, insbesondere ein Verteiler, zum Aufnehmen eines Schlauchs für elektrische Kabel vorgeschlagen. Die Aufnahmevorrichtung umfasst einen Basiskörper mit zumindest einem Aufnahmeabschnitt, in dem ein Endabschnitt des Schlauchs zumindest abschnittsweise aufnehmbar ist, wobei der Basiskörper eine erste Halbschale und eine zweite Halbschale aufweist, zwischen denen der Endabschnitt des Schlauchs anordenbar ist. Die Aufnahmevorrichtung umfasst weiterhin mehrere federelastisch verformbare Eingriffsabschnitte, die radial in den zumindest einen Aufnahmeabschnitt hineinragen und die dazu eingerichtet sind, formschlüssig in den Schlauch einzugreifen, wobei ein erster Teil der Eingriffsabschnitte an der ersten Halbschale vorgesehen ist und ein zweiter Teil der Eingriffsabschnitte an der zweiten Halbschale vorgesehen ist. Die Aufnahmevorrichtung weist ferner einen um den zumindest einen Aufnahmeabschnitt umlaufenden Ringabschnitt auf, an dem die Eingriffsabschnitte vorgesehen sind, wobei der Ringabschnitt in ein erstes Ringsegment, das der ersten Halbschale zugeordnet ist, und in ein zweites Ringsegment, das der zweiten Halbschale zugeordnet ist, unterteilt ist, und wobei das erste Ringsegment in einem geschlossenen Zustand der Aufnahmevorrichtung in die zweite Halbschale hineinragt.

Der Schlauch kann beispielsweise ein Wellschlauch, ein Glattschlauch, insbesondere ein Polyvinylchlorid-Schlauch (PVC-Schlauch), oder ein Textil- oder Gewebeschlauch sein. Der Schlauch kann daher auch als Glattschlauch, Textilschlauch, Gewebeschlauch oder Wellschlauch bezeichnet werden. Für den Fall, dass der Schlauch ein Glattschlauch oder ein Textil- oder Gewebeschlauch ist, greifen die Eingriffsabschnitte dadurch formschlüssig in den Schlauch ein, dass der Schlauch durch die Eingriffsabschnitte verformt, insbesondere reversibel verformt, wird. Bei einem Textil- oder Gewebeschlauch greifen die Eingriffsabschnitte in das Gewebe ein und können sich in diesem verhaken. Bei einem Glattschlauch greifen die Eingriffsabschnitte in das bevorzugt elastisch verformbare Material des Glattschlauchs ein. Insbesondere können die Eingriffsabschnitte auch in das Material einschneiden.

Für den Fall, dass der Schlauch ein Wellschlauch ist, greifen die Eingriffsabschnitte formschlüssig in ein Wellental des Schlauchs ein. Insbesondere umfasst die Aufnahmevorrichtung dann einen Basiskörper mit zumindest einem Aufnahmeabschnitt, in dem ein Endabschnitt des Schlauchs, insbesondere des Wellschlauchs, zumindest abschnittsweise aufnehmbar ist, wobei der Basiskörper eine erste Halbschale und eine zweite Halbschale aufweist, zwischen denen der Endabschnitt des Schlauchs, insbesondere des Wellschlauchs, anordenbar ist. Die Aufnahmevorrichtung umfasst weiterhin bevorzugt mehrere federelastisch verformbare Eingriffsabschnitte, die radial in den zumindest einen Aufnahmeabschnitt hineinragen und die dazu eingerichtet sind, formschlüssig in das Wellental des Schlauchs, insbesondere des Wellschlauchs, einzugreifen, wobei ein erster Teil der Eingriffsabschnitte an der ersten Halbschale vorgesehen ist und ein zweiter Teil der Eingriffsabschnitte an der zweiten Halbschale vorgesehen ist.

Insbesondere sind die Eingriffsabschnitte dazu eingerichtet, formschlüssig und radial in den Schlauch einzugreifen. Vorzugsweise weist die Aufnahmevorrichtung mehrere Aufnahmeabschnitte auf. Die Aufnahmevorrichtung kann auch als Verteiler, Verteilvorrichtung, Universalverteiler, Adapter, Adaptervorrichtung oder Universaladapter bezeichnet werden. Die Aufnahmevorrichtung ist insbesondere zum Aufnehmen eines Schlauchs eines Kabelbaums geeignet. Die Aufnahmevorrichtung kann T-förmig sein und kann daher auch als T-Verteiler bezeichnet werden. Vorzugsweise greifen dann wenn der Schlauch ein Wellschlauch ist alle Eingriffsabschnitte in ein gemeinsames Wellental des Schlauchs ein. Insbesondere sind die Eingriffsabschnitte dazu eingerichtet, formschlüssig zwischen zwei benachbarte Wellenberge des Schlauchs einzugreifen. Die Eingriffsabschnitte können auch als Schnapphaken bezeichnet werden. Die Verteilvorrichtung ist vorzugsweise ein Kunststoffspritzgussbauteil. Beispielsweise kann die Verteilvorrichtung aus Polyamid (PA) gefertigt sein. Der zumindest eine Aufnahmeabschnitt weist vorzugsweise eine kreisförmige Querschnittsgeometrie auf, wobei der Endabschnitt des Schlauchs zumindest abschnittsweise innerhalb des Aufnahmeabschnitts angeordnet ist. Die Aufnahmevorrichtung ist von einem geschlossenen Zustand, in dem die erste Halbschale auf der zweiten Halbschale angeordnet ist, in einen geöffneten Zustand, in dem die erste Halbschale nicht auf der zweiten Halbschale und insbesondere neben dieser, angeordnet ist, verbringbar. Unter "radial" ist eine Richtung hin zu einer Mittelachse des zumindest einen Aufnahmeabschnitts zu verstehen. Die radiale Richtung ist insbesondere senkrecht zu der Mittelachse orientiert.

Die Aufnahmevorrichtung ist geeignet für mobile Anwendungen, wie Kraftfahrzeuge, Wasserfahrzeuge, Luftfahrzeuge und Schienenfahrzeuge. Die Aufnahmevorrichtung kann auch für immobile Anwendungen, wie Aggregate, Gebäude, Werkzeugmaschinen, verfahrenstechnische Anlagen oder dergleichen eingesetzt werden. Eine formschlüssige Verbindung entsteht durch das Ineinander- oder Hintergreifen von mindestens zwei Verbindungspartnern, in diesem Fall den Eingriffsabschnitten und dem Wellental des als Wellschlauch ausgebildeten Schlauchs. Darunter, dass die Eingriffsabschnitte radial in den zumindest einen Aufnahmeabschnitt hineinragen, ist zu verstehen, dass die Eingriffsabschnitte in Richtung auf die Mittelachse des zumindest einen Aufnahmeabschnitts hin ragen.

Dadurch, dass die Eingriffsabschnitte federelastisch verformbar sind, können in dem zumindest einen Aufnahmeabschnitt wahlweise eine Vielzahl unterschiedlicher Schläuche, insbesondere Wellschläuche, mit unterschiedlichen Durchmessern aufgenommen werden. Hierzu ist im Vergleich zu bekannten Verteilern, bei denen für jeden Schlauchdurchmesser beziehungsweise für jede Kombination an Schlauchdurchmesser ein eigener Verteiler vorgesehen ist, eine enorme Kostenersparnis möglich, da zum einen die Anzahl der erforderlichen Kunststoffspritzgusswerkzeuge reduziert werden kann und zum anderen die Lagerhaltungskosten reduziert werden, da nicht unterschiedliche Verteiler vorgehalten werden müssen. Dadurch, dass das erste Ringsegment in einem geschlossenen Zustand der Aufnahmevorrichtung in die zweite Halbschale hineinragt, kann mit den dem ersten Ringsegment zugeordneten Eingriffsabschnitten eine Vorfixierung des Schlauchs erreicht werden. Das heißt, auch in dem geöffneten Zustand der Aufnahmevorrichtung kann der Schlauch nicht aus dieser herausfallen.

Gemäß einer weiteren Ausführungsform ist der Schlauch ein Wellschlauch, wobei die Eingriffsabschnitte dazu eingerichtet sind, formschlüssig in ein Wellental des Schlauchs einzugreifen.

Der Wellschlauch kann auch als Wellrohr bezeichnet werden oder ein Wellrohr sein. Ein Wellschlauch weist eine Wellung mit sich abwechselnden Wellenbergen und Wellentälern auf. Dabei ist zwischen zwei Wellenbergen ein Wellental und zwischen zwei Wellentälern ein Wellenberg angeordnet.

Gemäß einer weiteren Ausführungsform sind zumindest drei Eingriffsabschnitte vorgesehen und/oder der erste Teil der Eingriffsabschnitte umfasst zumindest zwei Eingriffsabschnitte und der zweite Teil der Eingriffsabschnitte umfasst zumindest einen Eingriffsabschnitt.

Vorzugsweise sind vier Eingriffsabschnitte vorgesehen. Es können jedoch auch mehr als vier Eingriffsabschnitte, beispielsweise fünf oder sechs Eingriffsabschnitte, vorgesehen sein. Die Anzahl der Eingriffsabschnitte ist beliebig. Vorzugweise umfasst der erste Teil der Eingriffsabschnitte drei Eingriffsabschnitte und der zweite Teil der Eingriffsabschnitte genau einen Eingriffsabschnitt. Weiterhin kann der erste Teil der Eingriffsabschnitte auch vier Eingriffsabschnitte und der zweite Teil der Eingriffsabschnitte zwei Eingriffsabschnitte umfassen.

Gemäß einer weiteren Ausführungsform sind die Eingriffsabschnitte ungleichmäßig oder gleichmäßig über einen Umfang des zumindest einen Aufnahmeabschnitts verteilt angeordnet.

Dadurch, dass die Eingriffsabschnitte ungleichmäßig über den Umfang des zumindest einen Aufnahmeabschnitts verteilt angeordnet sind, kann erreicht werden, dass der erste Teil der Eingriffsabschnitte schon in dem geöffneten Zustand der Aufnahmevorrichtung den Endabschnitt des Schlauchs so vorfixiert, dass der Schlauch auch in dem geöffneten Zustand der Aufnahmevorrichtung nicht aus dieser herausfallen kann. Hierdurch wird die Montage des Kabelbaums vereinfach.

Gemäß einer weiteren Ausführungsform weist jeder Eingriffsabschnitt ein Federelement auf, das schräg zu einer Mittelachse des zumindest einen Aufnahmeabschnitts angeordnet ist.

Vorzugsweise ist das Federelement in einem vorbestimmten Winkel zu der Mittelachse angeordnet. Der vorbestimmte Winkel kann beispielsweise 35° betragen. Das Federelement ist insbesondere keil- oder trapezförmig und verjüngt sich ausgehend von einem Ringabschnitt des zumindest einen Aufnahmeabschnitts hin zu der Mittelachse. Unter Verjüngen ist vorliegend zu verstehen, dass sich ein Querschnitt des Federelements in Richtung der Mittelachse verkleinert.

Gemäß einer weiteren Ausführungsform weist jeder Eingriffsabschnitt ein an dem Federelement vorgesehenes einziges Hakenelement auf, das dazu eingerichtet ist, formschlüssig in den Schlauch einzugreifen.

Insbesondere weist jeder Eingriffsabschnitt ein an dem Federelement vorgesehenes Hakenelement auf, das dazu eingerichtet ist, formschlüssig in das Wellental des Schlauchs, insbesondere des Wellschlauchs, einzugreifen. Das Federelement und das Hakenelement bilden einen Schnapphaken. Das heißt, die Eingriffsabschnitte können auch als Schnapphaken bezeichnet werden beziehungsweise sind Schnapphaken. Das Federelement und das Hakenelement sind bevorzugt materialeinstückig miteinander verbunden. Das heißt, sie bilden ein Bauteil. Beim federelastischen Verformen der Eingriffsabschnitte bewegen sich die Hakenelemente radial nach außen in Richtung des Ringabschnitts. Dadurch, dass nur ein einziges Hakenelement und nicht beispielsweise zwei nebeneinander angeordnete Hakenelemente vorgesehen sind, kann die Aufnahmevorrichtung für unterschiedlichste Typen von Wellschläuchen eingesetzt werden. Beispielsweise kann die Aufnahmevorrichtung hierdurch für verschiedene Wellschläuche eingesetzt werden, bei denen die Wellentäler unterschiedlich voneinander beabstandet angeordnet sind. Das Hakenelement greift dabei immer nur in ein Wellental ein.

Gemäß einer weiteren Ausführungsform ist der erste Teil der Eingriffsabschnitte, der an der ersten Halbschale vorgesehen ist, dazu eingerichtet, den Endabschnitt des Schlauchs in einem geöffneten Zustand der Aufnahmevorrichtung selbständig zu halten, so dass der Endabschnitt in dem geöffneten Zustand der Aufnahmevorrichtung an dem zumindest einen Aufnahmeabschnitt fixiert ist.

Hierdurch kann die zuvor schon beschriebene Vorfixierung des Schlauchs erreicht werden. Durch ein Verbringen der Aufnahmevorrichtung von dem geöffneten Zustand in einen geschlossenen Zustand greifen nun auch die Aufnahmeabschnitte, die an der zweiten Halbschale vorgesehen sind, formschlüssig in den Schlauch und insbesondere in das Wellental ein, wodurch der Endabschnitt an der Aufnahmevorrichtung verriegelt ist. Ein Herausziehen des Schlauchs in dem geschlossenen Zustand der Aufnahmevorrichtung aus derselben kann nur durch ein Zerstören der Aufnahmevorrichtung und/oder des Schlauchs erreicht werden. Hierdurch ist ein sicherer Halt des Schlauchs in der Aufnahmevorrichtung gewährleistet.

Gemäß einer weiteren Ausführungsform läuft der Ringabschnitt vollständig um den zumindest einen Aufnahmeabschnitt herum.

Der Ringabschnitt erstreckt sich radial in Richtung der Mittelachse des zumindest einen Aufnahmeabschnitts.

Gemäß einer weiteren Ausführungsform weisen die Ringsegmente unterschiedliche Umfangswinkel auf.

Beispielsweise kann das erste Ringsegment einen Umfangswinkel von 270° und das zweite Ringsegment einen Umfangswinkel von 90° aufweisen.

Gemäß einer weiteren Ausführungsform greift das zweite Ringsegment in dem geschlossenen Zustand der Aufnahmevorrichtung in das erste Ringsegment ein.

Insbesondere greift das zweite Ringsegment formschlüssig in das erste Ringsegment ein.

Gemäß einer weiteren Ausführungsform ist der erste Teil der Eingriffsabschnitte an dem ersten Ringsegment und der zweite Teil der Eingriffsabschnitte ist an dem zweiten Ringsegment vorgesehen.

Vorzugsweise sind zumindest zwei der Eingriffsabschnitte so an dem ersten Ringsegment positioniert, dass diese Eingriffsabschnitte in dem geschlossenen Zustand der Aufnahmevorrichtung vollständig innerhalb der zweiten Halbschale angeordnet sind.

Gemäß einer weiteren Ausführungsform umfasst die Aufnahmevorrichtung ferner mehrere Aufnahmeabschnitte, wobei jedem Aufnahmeabschnitt mehrere federelastisch verformbare Eingriffsabschnitte zugeordnet sind, die radial in den jeweiligen Aufnahmeabschnitt hineinragen und die dazu eingerichtet sind, formschlüssig in einen dem jeweiligen Aufnahmeabschnitt zugeordneten Schlauch einzugreifen.

Insbesondere umfasst die Aufnahmevorrichtung ferner mehrere Aufnahmeabschnitte, wobei jedem Aufnahmeabschnitt mehrere federelastisch verformbare Eingriffsabschnitte zugeordnet sind, die radial in den jeweiligen Aufnahmeabschnitt hineinragen und die dazu eingerichtet sind, formschlüssig in ein Wellental eines dem jeweiligen Aufnahmeabschnitt zugeordneten Schlauchs, insbesondere Wellschlauchs, einzugreifen. Vorzugsweise kann jedem Aufnahmeabschnitt ein Schlauch zugeordnet sein. Die Schläuche weisen dabei vorzugsweise unterschiedliche Durchmesser auf. Die Aufnahmevorrichtung ist ferner bevorzugt dazu eingerichtet, Schläuche unterschiedlicher Art, beispielsweise gleichzeitig einen Wellschlauch, einen Glattschlauch und einen Textilschlauch aufzunehmen. Die Aufnahmeabschnitte können konstruktiv identisch oder unterschiedlich, beispielsweise mit unterschiedlichen Durchmessern, ausgebildet sein. Vorzugsweise sind zumindest zwei Aufnahmeabschnitte vorgesehen. Die Anzahl der Aufnahmeabschnitte ist jedoch beliebig. Es können auch drei, vier, fünf oder mehr Aufnahmeabschnitte vorgesehen sein. Je nach Anordnung der Aufnahmeabschnitte kann die Aufnahmevorrichtung als sogenannter T-Verteiler, A-Verteiler, M-Verteiler, V-Verteiler, oder Y-Verteiler ausgebildet sein.

Gemäß einer bevorzugten Ausführungsform umfasst die Aufnahmevorrichtung einen Basiskörper mit einem ersten Aufnahmeabschnitt, in dem ein Endabschnitt eines ersten Schlauchs, insbesondere eines ersten Wellschlauchs, zumindest abschnittsweise aufnehmbar ist, einem zweiten Aufnahmeabschnitt, in dem ein Endabschnitt eines zweiten Schlauchs, insbesondere eines zweiten Wellschlauchs, zumindest abschnittsweise aufnehmbar ist und einem dritten Aufnahmeabschnitt, in dem ein Endabschnitt eines dritten Schlauchs, insbesondere eines dritten Wellschlauchs, zumindest abschnittsweise aufnehmbar ist, wobei der Basiskörper eine erste Halbschale und eine zweite Halbschale aufweist, zwischen denen der jeweilige Endabschnitt der Schläuche, insbesondere der Wellschläuche, anordenbar ist. Die Aufnahmevorrichtung umfasst bevorzugt ferner mehrere federelastisch verformbaren Eingriffsabschnitte, die radial in den jeweiligen Aufnahmeabschnitt hineinragen und die dazu eingerichtet sind, formschlüssig in ein Wellental des dem jeweiligen Aufnahmeabschnitt zugeordneten Schlauchs, insbesondere Wellschlauchs, einzugreifen, wobei ein erster Teil der Eingriffsabschnitte an der ersten Halbschale vorgesehen ist und ein zweiter Teil der Eingriffsabschnitte an der zweiten Halbschale vorgesehen ist. Die Aufnahmeabschnitte sind bevorzugt rohrförmig.

Gemäß einer weiteren Ausführungsform sind Mittelachsen der Aufnahmeabschnitte parallel zueinander, senkrecht zueinander oder in einem vorbestimmten Winkel zueinander positioniert.

Bevorzugt sind eine Mittelachse eines ersten Aufnahmeabschnitts und eine Mittelachse eines dritten Aufnahmeabschnitts parallel und insbesondere koaxial zueinander angeordnet und eine Mittelachse eines zweiten Aufnahmeabschnitts ist senkrecht oder in dem vorbestimmten Winkel zu der Mittelachse des ersten Aufnahmeabschnitts und/oder zu der Mittelachse des dritten Aufnahmeabschnitts positioniert. Bei drei Aufnahmeabschnitten ist die Aufnahmevorrichtung dann bevorzugt als T-Verteiler, V-Verteiler oder Y-Verteiler ausgebildet.

Gemäß einer weiteren Ausführungsform sind die erste Halbschale und die zweite Halbschale mit Hilfe eines Scharniers, insbesondere eines Filmscharniers, verschwenkbar miteinander verbunden.

Insbesondere sind die erste Halbschale, die zweite Halbschale und das Scharnier materialeinstückig ausgebildet. Das heißt, die erste Halbschale, die zweite Halbschale und das Scharnier können aus demselben Material gefertigt sein. Alternativ können die erste Halbschale, die zweite Halbschale und das Scharnier auch aus unterschiedlichen Materialen gefertigt sein. Beispielsweise kann das Scharnier aus einem anderen, insbesondere aus einem flexibleren, Material als die Halbschalen oder zumindest als eine der Halbschalen gefertigt sein. Hierzu kann die Aufnahmevorrichtung beispielsweise mit Hilfe eines Zweikomponenten-Spritzgussverfahrens hergestellt sein. Ein Filmscharnier ist eine dünnwandige Verbindung zweier verschwenkbar miteinander verbundener Bauteile, in diesem Fall der Halbschalen. Mit Hilfe des Scharniers kann die Aufnahmevorrichtung von dem geöffneten Zustand in den geschlossenen Zustand und umgekehrt verbracht werden. Die Aufnahmevorrichtung weist vorzugsweise weiterhin an einer der Halbschalen, beispielsweise an der ersten Halbschale, vorgesehene Schnapphaken und an der anderen Halbschale, beispielsweise der zweiten Halbschale, vorgesehene, zu den Schnapphaken korrespondierende Aufnahmeabschnitte auf. Mit Hilfe der Schnapphaken und der Aufnahmeabschnitte kann die Aufnahmevorrichtung in dem geschlossenen Zustand verriegelt werden. Durch eine federelastische Verformung der Schnapphaken und/oder der Aufnahmeabschnitte kann die Aufnahmevorrichtung wieder geöffnet werden.

Weiterhin wird ein Kabelbaum mit einem Schlauch und einer derartigen Aufnahmevorrichtung vorgeschlagen.

Der Kabelbaum weist vorzugsweise mehrere Schläuche, insbesondere Wellschläuche, Glattschläuche, Gewebeschläuche und/oder Textilschläuche, auf, in denen beispielsweise elektrische Leitungen oder Kabel aufgenommen sein können. Der Kabelbaum kann mehrere Aufnahmevorrichtungen umfassen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht einer Ausführungsform eines Kabelbaums;
- Fig. 2: zeigt eine weitere schematische Ansicht des Kabelbaums gemäß Fig. 1;
- Fig. 3: zeigt eine schematische perspektivische Ansicht einer Ausführungsform einer Aufnahmevorrichtung für den Kabelbaum gemäß Fig. 1;
- Fig. 4: zeigt eine weitere schematische perspektivische Ansicht der Aufnahmevorrichtung gemäß Fig. 3;
- Fig. 5: zeigt eine weitere schematische perspektivische Ansicht der Aufnahmevorrichtung gemäß Fig. 3;
- Fig. 6: zeigt eine schematische Aufsicht der Aufnahmevorrichtung gemäß Fig. 3;
- Fig. 7: zeigt eine schematische Schnittansicht der Aufnahmevorrichtung gemäß der Schnittlinie VII-VII der Fig. 6;
- Fig. 8: zeigt eine schematische Seitenansicht der Aufnahmevorrichtung gemäß Fig. 3;
- Fig. 9: zeigt eine weitere schematische Aufsicht der Aufnahmevorrichtung gemäß Fig. 3;
- Fig. 10: zeigt eine schematische Schnittansicht der Aufnahmevorrichtung gemäß der Schnittlinie X-X der Fig. 9;
- Fig. 11: zeigt eine weitere schematische Seitenansicht der Aufnahmevorrichtung gemäß Fig. 3;
- Fig. 12: zeigt eine schematische perspektivische Ansicht einer weiteren Ausführungsform einer Aufnahmevorrichtung für den Kabelbaum gemäß Fig. 1;
- Fig. 13: zeigt eine weitere schematische perspektivische Ansicht der Aufnahmevorrichtung gemäß Fig. 12;
- Fig. 14: zeigt eine schematische perspektivische Ansicht einer weiteren Ausführungsform einer Aufnahmevorrichtung für den Kabelbaum gemäß Fig. 1;
- Fig. 15: zeigt eine schematische perspektivische Ansicht einer weiteren Ausführungsform einer Aufnahmevorrichtung für den Kabelbaum gemäß Fig. 1;
- Fig. 16: zeigt eine weitere schematische perspektivische Ansicht der Aufnahmevorrichtung gemäß Fig. 15;
- Fig. 17: zeigt eine schematische perspektivische Ansicht einer weiteren Ausführungsform einer Aufnahmevorrichtung für den Kabelbaum gemäß Fig. 1;
- Fig. 18: zeigt eine schematische perspektivische Ansicht einer weiteren Ausführungsform einer Aufnahmevorrichtung für den Kabelbaum gemäß Fig. 1;
- Fig. 19: zeigt eine weitere schematische perspektivische Ansicht der Aufnahmevorrichtung gemäß Fig. 18;
- Fig. 20: zeigt eine schematische perspektivische Ansicht einer weiteren Ausführungsform einer Aufnahmevorrichtung für den Kabelbaum gemäß Fig. 1;
- Fig. 21: zeigt eine weitere schematische perspektivische Ansicht der Aufnahmevorrichtung gemäß Fig. 20; und
- Fig. 22: zeigt eine schematische perspektivische Ansicht einer weiteren Ausführungsform einer Aufnahmevorrichtung für den Kabelbaum gemäß Fig. 1.

In den Figuren sind gleiche oder funktionsgleiche Elemente mit denselben Bezugszeichen versehen worden, sofern nichts anderes angegeben ist.

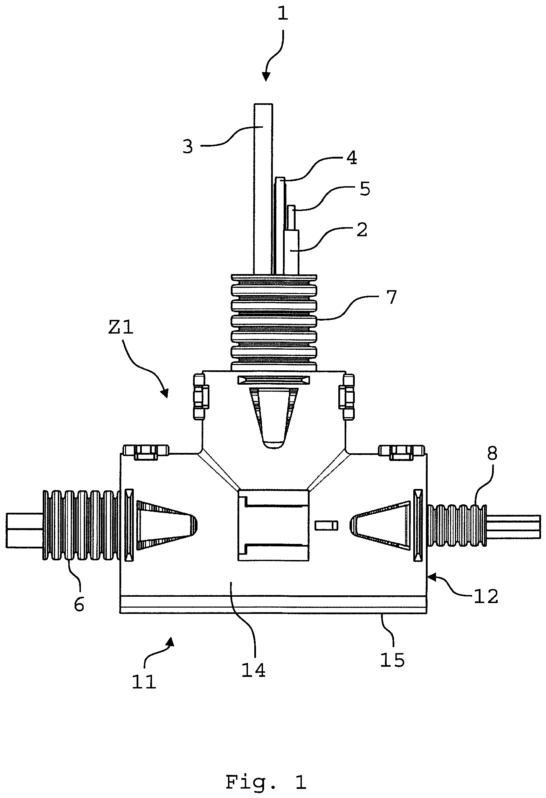

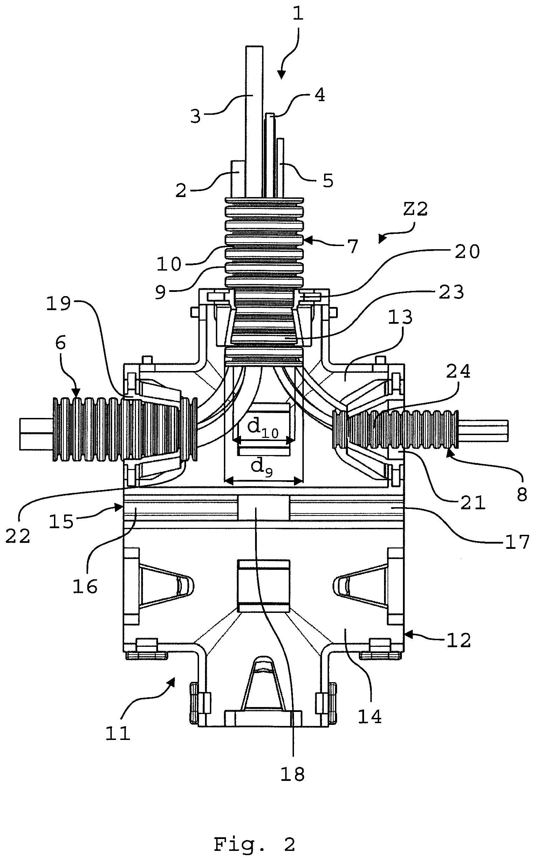

Die Fig. 1 und 2 zeigen jeweils eine schematische Ansicht einer Ausführungsform eines Kabelbaums 1. Der Kabelbaum 1 ist geeignet für mobile Anwendungen, wie Kraftfahrzeuge, Wasserfahrzeuge, Luftfahrzeuge und Schienenfahrzeuge. Der Kabelbaum 1 kann auch für immobile Anwendungen, wie Aggregate, Gebäude, Werkzeugmaschinen, verfahrenstechnische Anlagen oder dergleichen eingesetzt werden.

Der Kabelbaum 1 umfasst eine Vielzahl an Leitungen oder Kabeln 2 bis 5. Der Kabelbaum 1 umfasst weiterhin mehrere Schläuche 6 bis 8, insbesondere einen ersten Schlauch 6, einen zweiten Schlauch 7 und einen dritten Schlauch 8, in denen die Kabel 2 bis 5 zumindest abschnittsweise aufgenommen sind. Die Schläuche 6 bis 8 können unterschiedlicher oder gleicher Bauart sein. Weiterhin können die Schläuche 6 bis 8 jeweils gleiche, oder, wie in den Fig. 1 und 2 gezeigt, unterschiedliche Durchmesser aufweisen. Die Schläuche 6 bis 8 können beispielsweise Wellschläuche, Glattschläuche, insbesondere PVC-Schläuche, oder Textil- oder Gewebeschläuche sein. Die Schläuche 6 bis 8 können aus einem Kunststoffmaterial oder einem Kunststoffgewebe gefertigt sein. Im Folgenden wird die Erfindung anhand von Wellschläuchen erläutert. Das heißt, die Schläuche 6 bis 8 sind Wellschläuche.

Die Schläuche 6 bis 8 können auch Wellrohre sein oder als Wellrohre bezeichnet werden. Ein Wellschlauch unterscheidet sich vom ebenfalls axial flexiblen Wellrohr durch eine Elastizität in radialer und längsausdehnender Richtung. Diese ist im Wesentlichen bedingt durch das Material, sie kann aber auch durch die Formgebung der Wellung noch unterstützt werden. Wellschläuche sind sowohl Schutzrohr für die eigentlichen Nutzungsträger, wie Kabel, Schläuche oder Rohre, als auch selbst Transporteur von Flüssigkeiten und Gasen. Der Begriff "Wellschlauch" kann daher durch den Begriff "Wellrohr" ersetzt werden.

Jeder Schlauch 6 bis 8 umfasst eine Wellung mit Wellenbergen 9 und Wellentälern 10. Dabei ist zwischen zwei Wellenbergen 9 ein Wellental 10 beziehungsweise zwischen zwei Wellentälern 10 ist ein Wellenberg 9 angeordnet. Beispielsweise weist der Schlauch 7 an den Wellenbergen 9 einen Außendurchmesser dg und an den Wellentälern 10 einen Innendurchmesser d₁₀ auf.

Der Kabelbaum 1 umfasst weiterhin zumindest eine Aufnahmevorrichtung 11 zum Aufnehmen der Schläuche 6 bis 8. Die Aufnahmevorrichtung 11 kann auch als Verteiler, Verteilvorrichtung, Universalverteiler, Adapter, Adaptervorrichtung oder Universaladapter bezeichnet werden. Die Aufnahmevorrichtung 11 ist T-förmig und kann daher auch als T-Verteiler bezeichnet werden. Die Aufnahmevorrichtung 11 ist vorzugsweise aus einem Kunststoffmaterial gefertigt. Beispielsweise kann die Aufnahmevorrichtung 11 aus PA gefertigt sein. Insbesondere kann PA 6 oder PA 66 als Werkstoff für die Aufnahmevorrichtung 11 eingesetzt werden. Die Aufnahmevorrichtung 11 ist ein Kunststoffspritzgussbauteil.

Die Aufnahmevorrichtung 11 umfasst einen Basiskörper 12 mit einer ersten Halbschale 13 sowie einer zweiten Halbschale 14. Die Halbschalen 13, 14 sind mit Hilfe eines Scharniers 15 verschwenkbar miteinander verbunden. Das Scharnier 15 ist vorzugsweise ein Filmscharnier. Ein Filmscharnier ist eine dünnwandige Verbindung, die materialeinstückig mit zwei zu verbindenden Elementen, in diesem Fall den Halbschalen 13, 14, ausgebildet ist. Filmscharniere bestehen im Wesentlichen aus einer dünnwandigen Verbindung, die federelastisch verformbar ist. Das Scharnier 15 umfasst einen ersten Scharnierabschnitt 16 sowie einen zweiten Scharnierabschnitt 17, zwischen denen einen Ausnehmung 18 vorgesehen ist. Die Verformbarkeit des Scharniers 15 kann durch eine Breite der Ausnehmung 18 eingestellt werden. Alternativ können die erste Halbschale 13, die zweite Halbschale 14 und das Scharnier 15 auch aus unterschiedlichen Materialen gefertigt sein. Beispielsweise kann das Scharnier 15 aus einem anderen, insbesondere aus einem flexibleren, Material als die Halbschalen 13, 14 oder als eine der Halbschalen 13, 14 gefertigt sein. Hierzu kann die Aufnahmevorrichtung 11 beispielsweise mit Hilfe eines Zweikomponenten-Spritzgussverfahrens hergestellt sein.

Mit Hilfe des Scharniers 15 kann die Aufnahmevorrichtung 11 von einem in der Fig. 1 gezeigten geschlossenen Zustand Z1 in einen in der Fig. 2 gezeigten geöffneten Zustand Z2 verbracht werden. In dem geschlossenen Zustand Z1 liegen die Halbschalen 13, 14 aufeinander. In dem geöffneten Zustand Z2 liegen die Halbschalen 13, 14 nicht aufeinander und sind insbesondere nebeneinander positioniert.

Der Basiskörper 12 umfasst mehrere Aufnahmeabschnitte 19 bis 21, insbesondere einen ersten Aufnahmeabschnitt 19, einen zweiten Aufnahmeabschnitt 20 und einen dritten Aufnahmeabschnitt 21. Die Aufnahmeabschnitte 19 bis 21 sind rohrförmig mit einem kreisrunden Querschnitt. Jedem Aufnahmeabschnitt 19 bis 21 ist einer der Schläuche 6 bis 8 zugeordnet, wobei ein jeweiliger Endabschnitt 22 bis 24 der Schläuche 6 bis 8 in dem ihm zugeordneten Aufnahmeabschnitt 19 bis 21 zumindest abschnittsweise aufgenommen ist. In dem geschlossenen Zustand Z1 ist der jeweilige Endabschnitt 22 bis 24 der Schläuche 6 bis 8 zwischen den beiden Halbschalen 13, 14 angeordnet. Die Anzahl der Aufnahmeabschnitte 19 bis 21 ist beliebig. Beispielsweise können drei derartige Aufnahmeabschnitte 19 bis 21 vorgesehen sein.

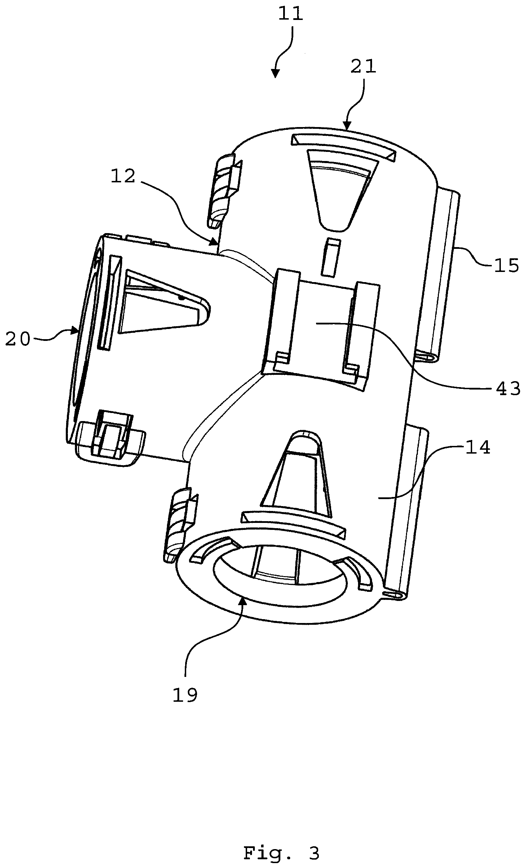

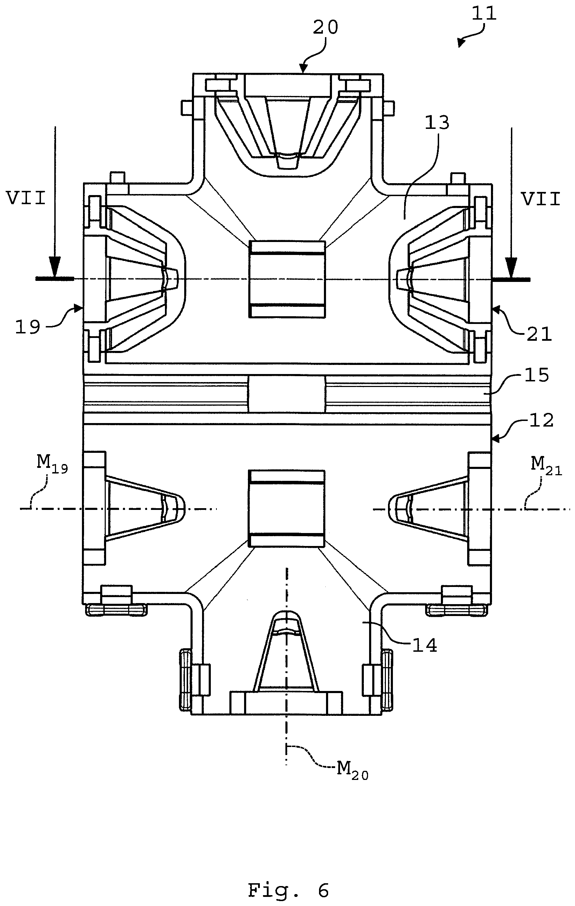

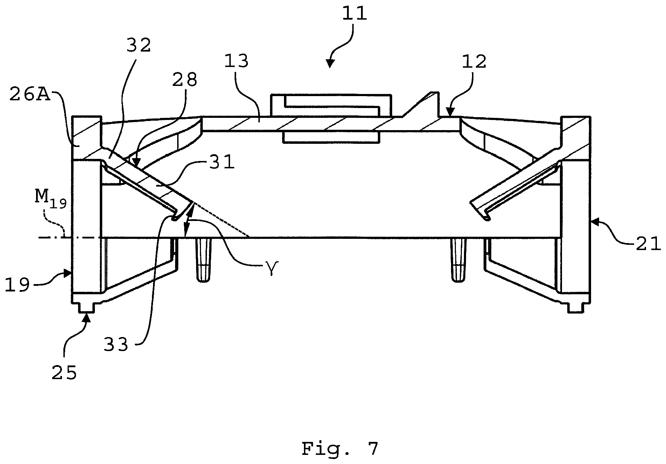

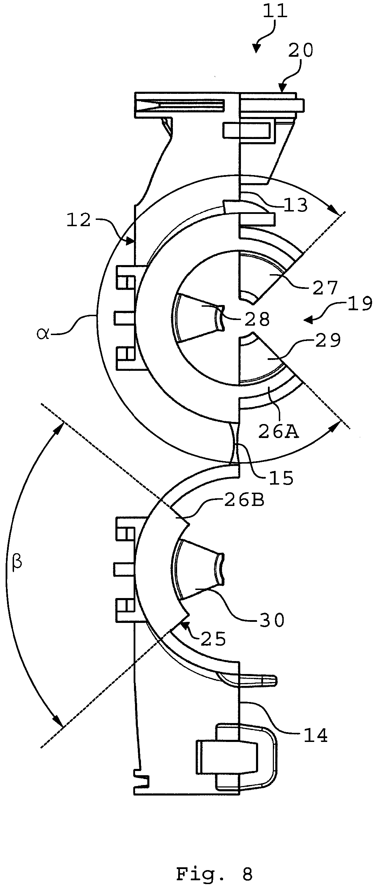

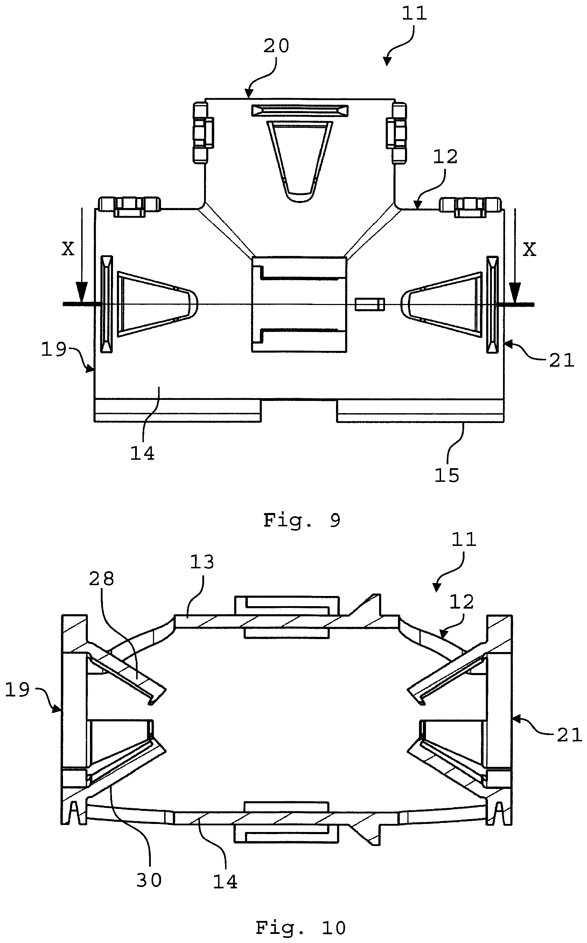

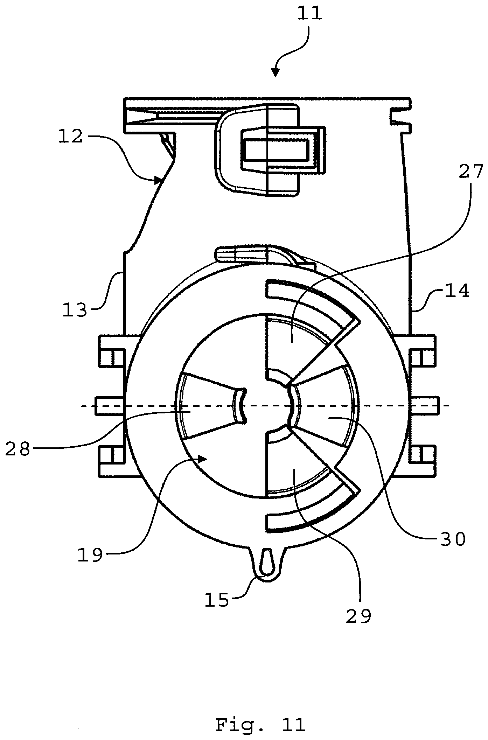

Die Fig. 3 bis 5 zeigen jeweils unterschiedliche schematische perspektivische Ansichten der Aufnahmevorrichtung 11. Die Fig. 6 zeigt eine schematische Aufsicht der Aufnahmevorrichtung 11 in dem geöffneten Zustand Z2. Die Fig. 7 zeigt eine schematische Schnittansicht der Aufnahmevorrichtung 11 gemäß der Schnittlinie VII-VII der Fig. 6. Die Fig. 8 zeigt eine schematische Seitenansicht der Aufnahmevorrichtung 11 in dem geöffneten Zustand Z2. Die Fig. 9 zeigt eine schematische Aufsicht der Aufnahmevorrichtung 11 in dem geschlossenen Zustand Z1. Die Fig. 10 zeigt eine schematische Schnittansicht der Aufnahmevorrichtung 11 gemäß der Schnittlinie X-X der Fig. 9 und die Fig. 11 zeigt eine schematische Seitenansicht der Aufnahmevorrichtung 11 in dem geschlossenen Zustand Z1. Im Folgenden wird auf die Fig. 3 bis 11 gleichzeitig Bezug genommen.

Jedem Aufnahmeabschnitt 19 bis 21 ist eine Symmetrie- oder Mittelachse M₁₉ bis M₂₁ (Fig. 6) zugeordnet. Die Aufnahmeabschnitte 19 bis 21 können jeweils rotationssymmetrisch zu den ihnen zugeordneten Mittelachsen M₁₉ bis M₂₁ ausgebildet sein. Beispielsweise können die Mittelachse M₁₉ des ersten Aufnahmeabschnitts 19 und die Mittelachse M₂₁ des dritten Aufnahmeabschnitts 21 parallel zueinander und insbesondere koaxial angeordnet sein. Die Mittelachse M₂₀ des zweiten Aufnahmeabschnitts 20 kann senkrecht zu der Mittelachse M₁₉ und der Mittelachse M₂₁ angeordnet sein. Alternativ können die Mittelachsen M₁₉ bis M₂₁ oder zumindest eine der Mittelachsen M₁₉ bis M₂₁ auch in einem vorbestimmten Winkel relativ zueinander positioniert sein. Unter senkrecht ist vorliegend ein Winkel von 90° ± 10°, weiter bevorzugt von 90° ± 5°, weiter bevorzugt von 90° ± 1°, weiter bevorzugt von genau 90° zu verstehen. Die Aufnahmeabschnitte 19 bis 21 können gleich, das heißt, mit gleichen Durchmessern, oder unterschiedlich, das heißt, mit unterschiedlichen Durchmessern, ausgebildet sein.

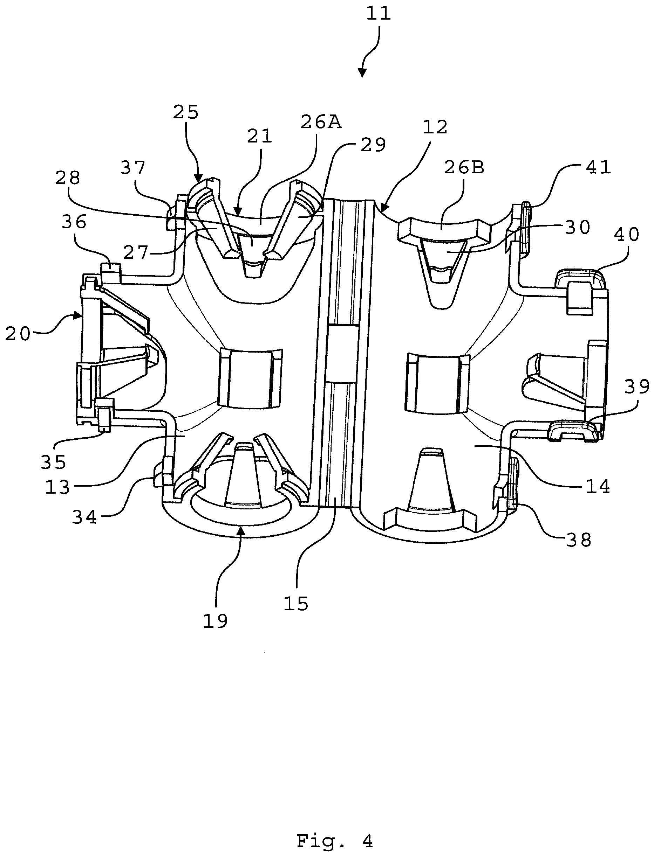

Jeder Aufnahmeabschnitt 19 bis 21 umfasst einen den jeweiligen Aufnahmeabschnitt 19 bis 21 umlaufenden Ringabschnitt 25 (Fig. 4, Fig. 8). Der Ringabschnitt 25 ist in ein erstes Ringsegment 26A, das der ersten Halbschale 13 zugeordnet ist, und in ein zweites Ringsegment 26B, das der zweiten Halbschale 14 zugeordnet ist, unterteilt. In dem geschlossenen Zustand Z1 der Aufnahmevorrichtung 11 ragt das erste Ringsegment 26A in die zweite Halbschale 14 hinein. Hierzu erstreckt sich das erste Ringsegment 26A aus der ersten Halbschale 13 heraus. Beispielsweise weist das erste Ringsegment 26A, wie in der Fig. 8 gezeigt, einen Umfangswinkel α von 270° auf. Das zweite Ringsegment 26B kann hierzu korrespondierend einen Umfangswinkel β von 90° aufweisen. In dem geschlossenen Zustand Z1 der Aufnahmevorrichtung 11 greift das zweite Ringsegment 26B formschlüssig in das erste Ringsegment 26A ein.

Jedem Aufnahmeabschnitt 19 bis 21 sind mehrere federelastisch verformbare Eingriffsabschnitte 27 bis 30 zugeordnet (Fig. 4, Fig. 8, Fig. 11). Es können ein erster Eingriffsabschnitt 27, ein zweiter Eingriffsabschnitt 28, ein dritter Eingriffsabschnitt 29 und ein vierter Eingriffsabschnitt 30 vorgesehen sein. Die Anzahl der Eingriffsabschnitte 27 bis 30 pro Aufnahmeabschnitt 19 bis 21 ist beliebig. Beispielsweise können vier derartige Eingriffsabschnitte 27 bis 30 vorgesehen sein, wobei ein erster Teil der Eingriffsabschnitte 27 bis 30, beispielsweise die Eingriffsabschnitte 27 bis 29, an der ersten Halbschale 13 vorgesehen ist und ein zweiter Teil der Eingriffsabschnitte 27 bis 30, beispielsweise der vierte Eingriffsabschnitt 30, an der zweiten Halbschale 14 vorgesehen ist.

Zumindest sind pro Aufnahmeabschnitt 19 bis 21 drei Eingriffsabschnitte 27 bis 30 vorgesehen, wobei der erste Teil der Eingriffsabschnitte 27 bis 30 zumindest zwei Eingriffsabschnitte 27 bis 29 und der zweite Teil der Eingriffsabschnitte 27 bis 30 zumindest einen derartigen Eingriffsabschnitt 30 umfasst. Wie die Fig. 11 zeigt, sind die Eingriffsabschnitte 27 bis 30 ungleichmäßig über einen jeweiligen Umfang der Aufnahmeabschnitte 19 bis 21 verteilt angeordnet. Die Eingriffsabschnitte 27 bis 29 sind dem ersten Ringsegment 26A des Ringabschnitts 25 und der vierte Eingriffsabschnitt 30 ist dem zweiten Ringsegment 26B zugeordnet.

Wie in der Fig. 7 anhand des zweiten Eingriffsabschnitts 28 gezeigt, erstreckt sich dieser aus dem ersten Ringsegment 26A des Ringabschnitts 25 heraus schräg hin zu der Mittelachse M₁₉ des Aufnahmeabschnitts 19. Beispielsweise schließt der zweite Eingriffsabschnitt 28, wie auch die Eingriffsabschnitte 27, 29, 30, mit der Mittelachse M₁₉ einen Neigungswinkel γ von 35° ein. Der Neigungswinkel γ ist beliebig. Jeder Eingriffsabschnitt 27 bis 30 umfasst ein Federelement 31, das schräg zu der Mittelachse M₁₉ positioniert ist. Das Federelement 31 ist federelastisch verformbar. Das Federelement 31 ist keil-, trapez- oder dreieckförmig und läuft in Richtung der Mittelachse M₁₉ spitz zu. Das heißt, das Federelement 31 verjüngt sich in Richtung auf die Mittelachse M₁₉ zu.

Das Federelement 31 erstreckt sich aus dem jeweiligen Ringsegment 26A, 26B heraus und ist mit diesem über eine Gelenkstelle 32 federelastisch verbunden. Die Gelenkstelle 32 kann eine Dünnstelle ähnlich einem Filmscharnier sein. Die Gelenkstelle 32 kann optional sein, das heißt, das Federelement 31 kann auch ohne Querschnittsverengung direkt mit dem jeweiligen Ringsegment 26A, 26B des Ringabschnitts 25 verbunden sein. Endseitig an dem Federelement 31 ist ein Hakenelement 33 vorgesehen, das dazu eingerichtet ist, formschlüssig in ein Wellental 10 des dem jeweiligen Aufnahmeabschnitts 19 bis 21 zugeordneten Schlauchs 6 bis 8 formschlüssig einzugreifen. Eine formschlüssige Verbindung entsteht durch das Ineinander- oder Hintergreifen von mindestens zwei Verbindungspartnern, in diesem Fall dem Wellental 10 und den Eingriffsabschnitten 27 bis 30. Das Federelement 31 mit dem Hakenelement 33 bildet einen federelastisch verformbaren Schnapphaken. Das heißt, die Eingriffsabschnitte 27 bis 30 sind Schnapphaken oder können als Schnapphaken bezeichnet werden. Das Federelement 31 und das Hakenelement 33 sind materialeinstückig miteinander verbunden.

Die Eingriffsabschnitte 27 bis 29 sind dazu eingerichtet, den jeweiligen Endabschnitt 22 bis 24 des Schlauchs 6 bis 8 in dem geöffneten Zustand Z2 der Aufnahmevorrichtung 11 selbstständig zu halten. Das heißt, der jeweilige Endabschnitt 22 bis 24 ist in dem geöffneten Zustand Z2 der Aufnahmevorrichtung 11 in dem ihm zugeordneten Aufnahmeabschnitt 19 bis 21 auch ohne ein Verbringen der Aufnahmevorrichtung 11 von dem geöffneten Zustand Z2 in den geschlossenen Zustand Z1 fixiert. Hierdurch kann bei der Montage der Aufnahmevorrichtung 11 eine Vorfixierung der Schläuche 6 bis 8 erreicht werden. Hierzu sind, wie in der Fig. 11 zu erkennen ist, die Eingriffsabschnitte 27 bis 29 so angeordnet sein, dass diese den jeweiligen Endabschnitt 22 bis 24 der Wellfläche 6 bis 8 umfänglich umgreifen. Dazu sind der erste und der dritte Eingriffsabschnitt 27, 29 in dem geschlossenen Zustand Z1 der Aufnahmevorrichtung 11 vollständig innerhalb der zweiten Halbschale 14 angeordnet.

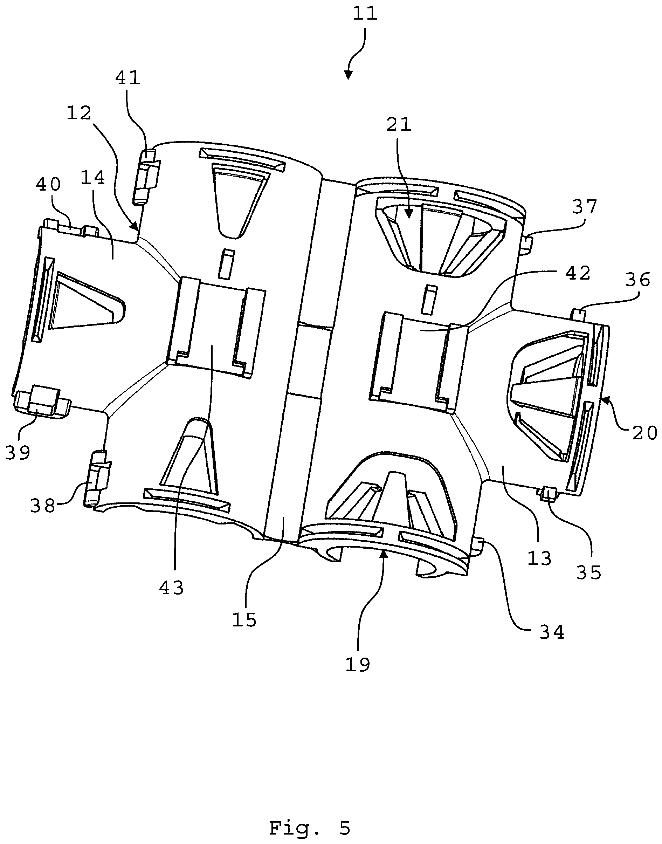

Die Aufnahmevorrichtung 11 umfasst weiterhin eine Vielzahl an der ersten Halbschale 13 vorgesehene Schnapphaken 34 bis 37 (Fig. 4, Fig. 5), die dazu eingerichtet sind, in an der zweiten Halbschale 14 vorgesehene Aufnahmeabschnitte 38 bis 41 einzuschnappen. Beim Verbringen der Aufnahmevorrichtung 11 von dem geöffneten Zustand Z2 in den geschlossenen Zustand Z1 schnappen die Schnapphaken 34 bis 37 in die ihnen zugeordneten Aufnahmeabschnitte 38 bis 41 ein, wobei sich die Schnapphaken 34 bis 37 und/oder die Aufnahmeabschnitte 38 bis 41 federelastisch verformen. Hierdurch wird die Aufnahmevorrichtung 11 in dem geschlossenen Zustand Z1 verriegelt. Weiterhin umfasst die Aufnahmevorrichtung 11 an der ersten Halbschale 13 und/oder an der zweiten Halbschale 14 vorgesehene Befestigungselemente 42, 43, mit deren Hilfe die Aufnahmevorrichtung 11 beispielsweise in einem Schaltschrank oder dergleichen montierbar ist.

Die Funktionalität der Aufnahmevorrichtung 11 wird im Folgenden erläutert. Wie in der Fig. 2 gezeigt, werden in dem geöffneten Zustand Z2 der Aufnahmevorrichtung 11 zur Montage des Kabelbaums 1 die Schläuche 6 bis 8 mit ihren jeweiligen Endabschnitten 22 bis 24 in den dem jeweiligen Schlauch 6 bis 8 zugeordneten Aufnahmeabschnitte 19 bis 21 eingedrückt. Die Montagerichtung ist dabei senkrecht zu den Mittelachsen M₁₉ bis M₂₁ orientiert. Dabei können die Kabel 2 bis 5 bereits in den Schläuchen 6 bis 8 aufgenommen und auf diese verteilt sein.

Beim Eindrücken der Endabschnitte 22 bis 24 der Schläuche 6 bis 8 in die jeweiligen Aufnahmeabschnitte 19 bis 21 verformen sich die Eingriffsabschnitte 27 bis 29, die der ersten Halbschale 13 zugeordnet sind, federelastisch und greifen formschlüssig gemeinsam in ein Wellental 10 des jeweiligen Schlauchs 6 bis 8 ein. Je nachdem wie groß der Innendurchmesser d₁₀ des jeweiligen Schlauchs 6 bis 8 ist, werden die Eingriffsabschnitte 27 bis 28 stärker oder weniger stark verformt. Beim Verformen der Eingriffsabschnitte 27 bis 28 werden diese radial nach außen in Richtung des Ringabschnitts 25 verformt. Dadurch, dass die Eingriffsabschnitte 27 bis 29 die jeweiligen Endabschnitte 22 bis 24 schon in dem geöffneten Zustand Z2 formschlüssig umgreifen, sind die Schläuche 6 bis 8 an der ersten Halbschale 13 vorfixiert und können nicht mehr aus dieser herausfallen.

Anschließend wird die Aufnahmevorrichtung 11 von dem in der Fig. 2 gezeigten geöffneten Zustand Z2 in den in der Fig. 1 gezeigten geschlossenen Zustand Z1 verbracht, wobei beim Schließen der Aufnahmevorrichtung 11 die Schnapphaken 34 bis 37 in die ihnen zugeordneten Aufnahmeabschnitte 38 bis 41 einrasten oder einschnappen. Weiterhin greift der vierte Eingriffsabschnitt 30, der an der zweiten Halbschale 14 vorgesehen ist, beim Verbringen der Aufnahmevorrichtung 11 von dem geöffneten Zustand Z2 in den geschlossenen Zustand Z1 ebenfalls formschlüssig in das Wellental 10 ein, in das schon die Eingriffsabschnitte 27 bis 29 eingreifen, und verformt sich dabei federelastisch. Mit Hilfe des vierten Eingriffsabschnitts 30 kann somit eine Verriegelung der Schläuche 6 bis 8 nach deren Vorfixierung erfolgen. Ein Herausziehen der Schläuche 6 bis 8 aus der Aufnahmevorrichtung 11 ist in dem geschlossenen Zustand Z1 ohne eine Zerstörung der Aufnahmevorrichtung 11 und/oder der Schläuche 6 bis 8 nicht mehr möglich. Die Aufnahmevorrichtung 11 ist geeignet für mobile Anwendungen, wie Kraftfahrzeuge, Wasserfahrzeuge, Luftfahrzeuge und Schienenfahrzeuge. Die Aufnahmevorrichtung 11 kann auch für immobile Anwendungen, wie Aggregate, Gebäude, Werkzeugmaschinen, verfahrenstechnische Anlagen oder dergleichen eingesetzt werden.

Dadurch, dass die Eingriffsabschnitte 27 bis 30 federelastisch verformbar sind, kann mit Hilfe der Aufnahmevorrichtung 11 ein sehr großer Durchmesserbereich der Schläuche 6 bis 8 abgedeckt werden. Das heißt, es ist nicht für jeden Schlauchdurchmesser eine gesonderte Aufnahmevorrichtung 11 erforderlich. Hierdurch kann beispielsweise die Anzahl der erforderlichen Spritzgusswerkzeuge zur Herstellung der Aufnahmevorrichtung 11 reduziert werden. Weiterhin können auch die Lagerhaltungskosten für die Aufnahmevorrichtung 11 reduziert werden, da nicht für jeden Schlauchdurchmesser oder für jede Kombination an Schlauchdurchmessern eine gesonderte Aufnahmevorrichtung 11 vorgehalten werden muss. Dies ergibt im Vergleich zu bekannten Aufnahmevorrichtungen eine enorme Kostenersparnis.

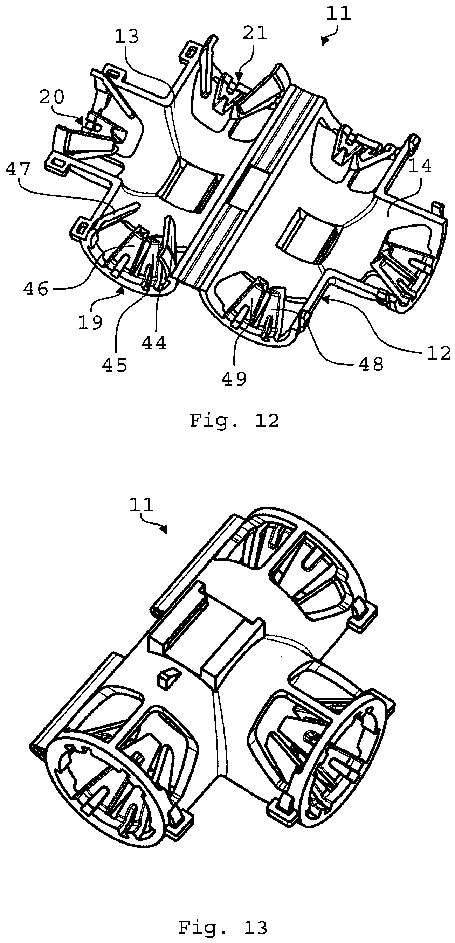

Die Fig. 12 und 13 zeigen jeweils in einer schematischen perspektivischen Ansicht eine weitere Ausführungsform einer Aufnahmevorrichtung 11. Die Aufnahmevorrichtung 11 gemäß den Fig. 12 und 13 unterscheidet sich von der Aufnahmevorrichtung gemäß den Fig. 1 bis 11 dadurch, dass anstelle von vier Eingriffsabschnitten 27 bis 30 sechs Eingriffsabschnitte 44 bis 49 vorgesehen sind, wobei vier Eingriffsabschnitte 44 bis 47 der ersten Halbschale 13 und zwei Eingriffsabschnitte 48, 49 der zweiten Halbschale 14 zugeordnet sind. Die Eingriffsabschnitte 44 bis 49 sind ansonsten baugleich mit den Eingriffsabschnitten 27 bis 30. Die Ausführungsform der Aufnahmevorrichtung 11 gemäß den Fig. 12 und 13 ist besonders für Schläuche 6 bis 8 mit großen Durchmessern geeignet. Die Aufnahmevorrichtung 11 ist insbesondere als T-Verteiler ausgebildet.

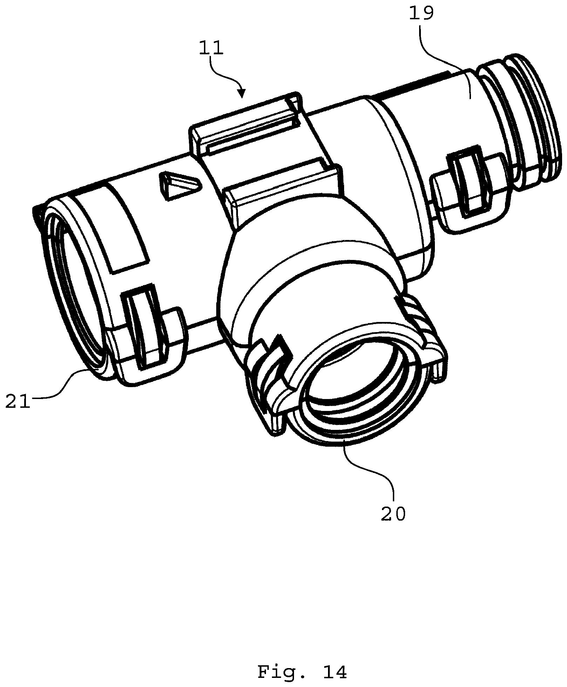

Die Fig. 14 zeigt eine schematische perspektivische Ansicht einer weiteren Ausführungsform einer Aufnahmevorrichtung 11. Die Aufnahmevorrichtung 11 gemäß der Fig. 14 unterscheidet sich von der Aufnahmevorrichtung 11 gemäß den Fig. 1 bis 11 dadurch, dass die Aufnahmeabschnitte 19 bis 21 unterschiedliche Durchmesser aufweisen. Die Aufnahmevorrichtung 11 ist insbesondere als T-Verteiler ausgebildet. Die Eingriffsabschnitte 27 bis 30 der Aufnahmeabschnitte 19 bis 21 sind in der Fig. 14 nicht dargestellt.

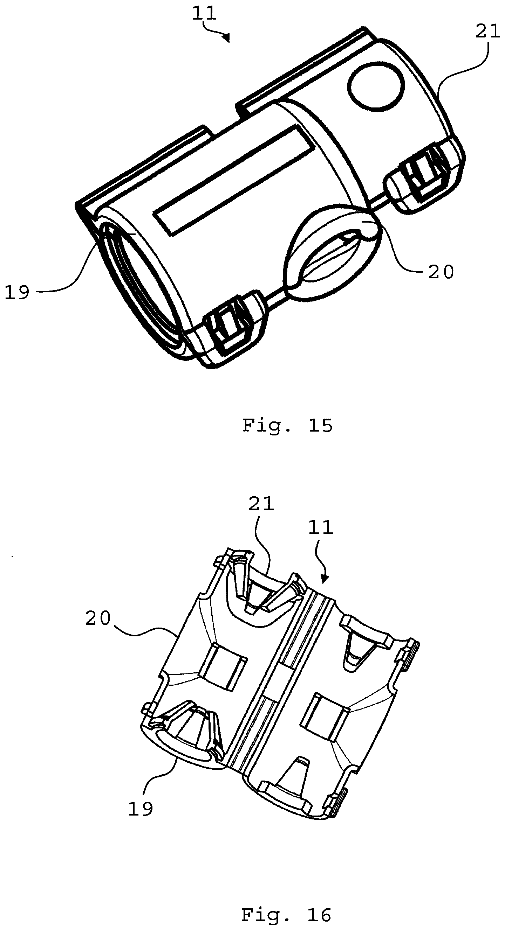

Die Fig. 15 und 16 zeigen jeweils in einer schematischen perspektivischen Ansicht eine weitere Ausführungsform einer Aufnahmevorrichtung 11. Die Aufnahmevorrichtung 11 gemäß den Fig. 15 und 16 unterscheidet sich von der Aufnahmevorrichtung 11 gemäß den Fig. 1 bis 11 dadurch, dass der erste Aufnahmeabschnitt 19 und der dritte Aufnahmeabschnitt 21 unterschiedliche Durchmesser aufweisen und dass der zweite Aufnahmeabschnitt 20 lediglich als in den Halbschalen 13, 14 vorgesehene Bohrung ohne Eingriffsabschnitte 27 bis 30 ausgebildet ist. Die Aufnahmevorrichtung 11 gemäß den Fig. 15 und 16 kann auch als A-Verteiler bezeichnet werden.

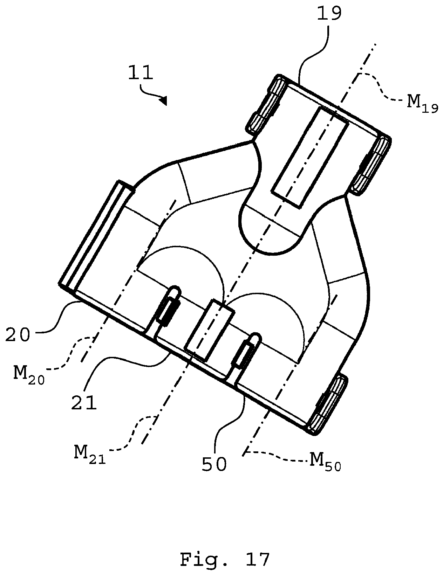

Die Fig. 17 zeigt eine weitere schematische perspektivische Ansicht einer Ausführungsform einer Aufnahmevorrichtung 11. Die Aufnahmevorrichtung 11 gemäß der Fig. 17 unterscheidet sich von der Aufnahmevorrichtung 11 gemäß den Fig. 1 bis 11 dadurch, dass anstelle von drei Aufnahmeabschnitten 19 bis 21 vier Aufnahmeabschnitte 19 bis 21, 50 vorgesehen sind, deren Mittelachsen M₁₉, M₂₀, M₂₁ und M₅₀ parallel zueinander angeordnet sind, wobei die Mittelachse M₂₁ koaxial zu der Mittelachse M₁₉ und die Mittelachsen M₂₀, M₅₀ nicht koaxial zu der Mittelachse M₁₉ ausgebildet sind. Die Aufnahmevorrichtung 11 gemäß der Fig. 17 kann auch als M-Verteiler bezeichnet werden. Die Eingriffsabschnitte 27 bis 30 der Aufnahmeabschnitte 19 bis 21, 50 sind in der Fig. 17 nicht dargestellt.

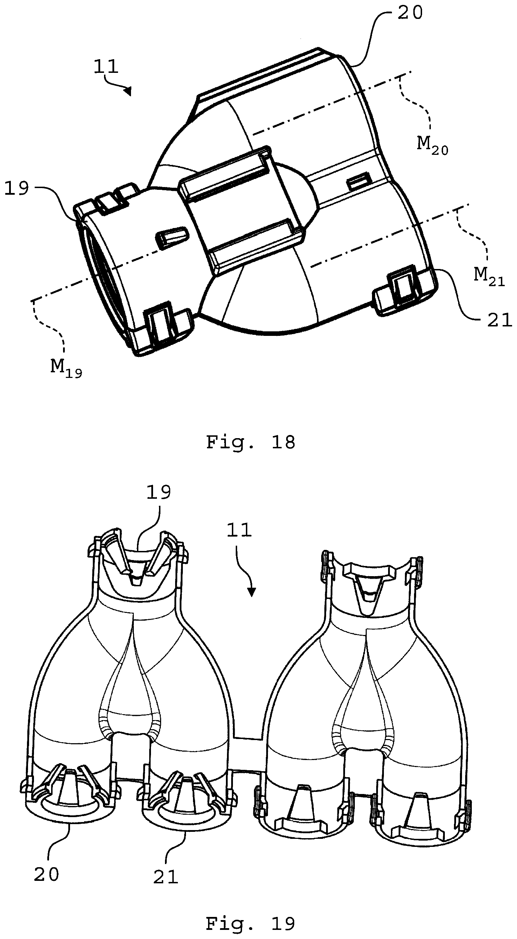

Die Fig. 18 und 19 zeigen jeweils in einer schematischen perspektivischen Ansicht eine weitere Ausführungsform einer Aufnahmevorrichtung 11. Die Aufnahmevorrichtung 11 gemäß den Fig. 18 und 19 unterscheidet sich von der Aufnahmevorrichtung 11 gemäß den Fig. 1 bis 11 dadurch, dass die Aufnahmeabschnitte 19 bis 21 unterschiedliche Durchmesser aufweisen, wobei die Aufnahmeabschnitte 20, 21 einen gleichen Durchmesser aufweisen, und dadurch, dass die Mittelachsen M₁₉, M₂₀, M₂₁ parallel zueinander, jedoch nicht koaxial zueinander angeordnet sind. Die Aufnahmevorrichtung 11 gemäß der Fig. 18 und 19 kann auch als V-Verteiler bezeichnet werden.

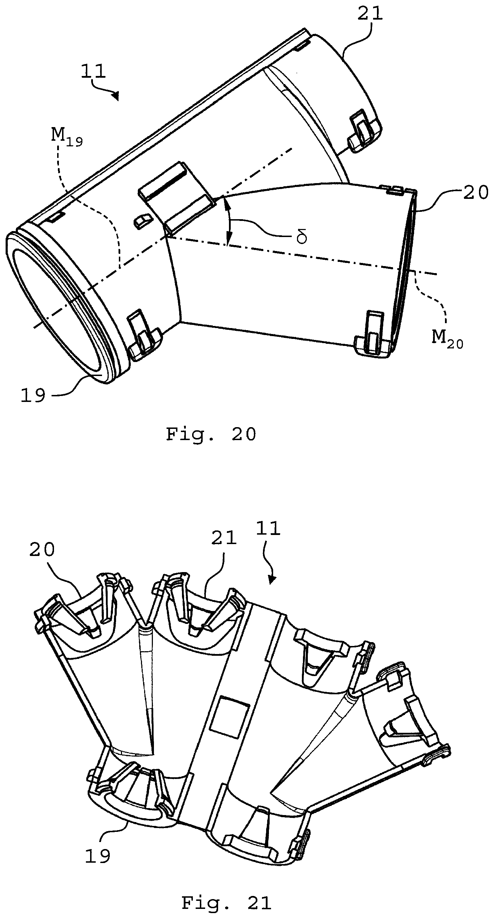

Die Fig. 20 und 21 zeigen jeweils in einer schematischen perspektivischen Ansicht eine weitere Ausführungsform einer Aufnahmevorrichtung 11. Die Aufnahmevorrichtung 11 gemäß den Fig. 20 und 21 unterscheidet sich von der Aufnahmevorrichtung 11 gemäß den Fig. 1 bis 11 dadurch, dass die Aufnahmeabschnitte 19 bis 21 unterschiedliche Durchmesser aufweisen, und dadurch, dass die Mittelachse M₂₀ des zweiten Aufnahmeabschnitts 20 schräg zu der Mittelachse M₁₉ des ersten Aufnahmeabschnitts 19 angeordnet ist. Beispielsweise kann zwischen den Mittelachsen M₁₉, M₂₀ ein Winkel δ vorgesehen sein. Der Winkel δ kann beispielsweise 45° betragen. Die Aufnahmevorrichtung 11 gemäß der Fig. 20 und 21 kann auch als Y-Verteiler bezeichnet werden.

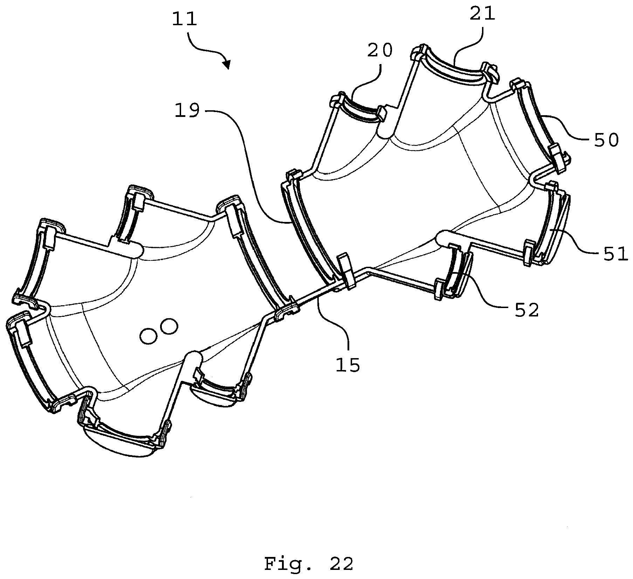

Die Fig. 22 zeigt eine weitere schematische perspektivische Ansicht einer Ausführungsform einer Aufnahmevorrichtung 11. Die Aufnahmevorrichtung 11 gemäß der Fig. 22 unterscheidet sich von der Aufnahmevorrichtung 11 gemäß den Fig. 1 bis 11 dadurch, dass nicht nur drei Aufnahmeabschnitte 19 bis 21 sondern sechs Aufnahmeabschnitte 19 bis 21 und 50 bis 52 vorgesehen sind, die tannenbaumförmig angeordnet sind. Die Aufnahmevorrichtung 11 gemäß der Fig. 22 kann auch als Mehrfach-Verteiler bezeichnet werden. Die Eingriffsabschnitte 27 bis 30 der Aufnahmeabschnitte 19 bis 21 und 50 bis 52 sind in der Fig. 22 nicht dargestellt.

Obwohl die vorliegende Erfindung anhand von Ausführungsbeispielen beschrieben wurde, ist sie vielfältig modifizierbar.

### BEZUGSZEICHENLISTE

- 1: Kabelbaum
- 2: Kabel
- 3: Kabel
- 4: Kabel
- 5: Kabel
- 6: Schlauch
- 7: Schlauch
- 8: Schlauch
- 9: Wellenberg
- 10: Wellental
- 11: Aufnahmevorrichtung
- 12: Basiskörper
- 13: Halbschale
- 14: Halbschale
- 15: Scharnier
- 16: Scharnierabschnitt
- 17: Scharnierabschnitt
- 18: Ausnehmung
- 19: Aufnahmeabschnitt
- 20: Aufnahmeabschnitt
- 21: Aufnahmeabschnitt
- 22: Endabschnitt
- 23: Endabschnitt
- 24: Endabschnitt
- 25: Ringabschnitt
- 26A: Ringsegment
- 26B: Ringsegment
- 27: Eingriffsabschnitt
- 28: Eingriffsabschnitt
- 29: Eingriffsabschnitt
- 30: Eingriffsabschnitt
- 31: Federelement
- 32: Gelenkstelle
- 33: Hakenelement
- 34: Schnapphaken
- 35: Schnapphaken
- 36: Schnapphaken
- 37: Schnapphaken
- 38: Aufnahmeabschnitt
- 39: Aufnahmeabschnitt
- 40: Aufnahmeabschnitt
- 41: Aufnahmeabschnitt
- 42: Befestigungselement
- 43: Befestigungselement
- 44: Eingriffsabschnitt
- 45: Eingriffsabschnitt
- 46: Eingriffsabschnitt
- 47: Eingriffsabschnitt
- 48: Eingriffsabschnitt
- 49: Eingriffsabschnitt
- 50: Aufnahmeabschnitt
- 51: Aufnahmeabschnitt
- 52: Aufnahmeabschnitt
- d₉: Außendurchmesser
- d₁₀: Innendurchmesser
- M₁₉: Mittelachse
- M₂₀: Mittelachse
- M₂₁: Mittelachse
- M₅₀: Mittelachse
- Z1: Zustand
- Z2: Zustand
- α: Umfangswinkel
- β: Umfangswinkel
- γ: Neigungswinkel
- δ: Winkel

## Patentansprüche

1. Aufnahmevorrichtung (11), insbesondere Verteiler, zur Aufnahme eines Schlauchs (6 - 8) für elektrische Kabel (2 - 5), mit:
einem Basiskörper (12) mit zumindest einem Aufnahmeabschnitt (19 - 21, 50 - 52), in dem ein Endabschnitt (22 - 24) des Schlauchs (6 - 8) zumindest abschnittsweise aufnehmbar ist, wobei der Basiskörper (12) eine erste Halbschale (13) und eine zweite Halbschale (14) aufweist, zwischen denen der Endabschnitt (22 - 24) des Schlauchs (6 - 8) anordenbar ist,
mehreren federelastisch verformbaren Eingriffsabschnitten (27 - 30, 44 - 49), die radial in den zumindest einen Aufnahmeabschnitt (19 - 21, 50 - 52) hineinragen und die dazu eingerichtet sind, formschlüssig in den Schlauch (6 - 8) einzugreifen, wobei ein erster Teil der Eingriffsabschnitte (27 - 30, 44 - 49) an der ersten Halbschale (13) vorgesehen ist und ein zweiter Teil der Eingriffsabschnitte (27 - 30, 44 - 49) an der zweiten Halbschale (14) vorgesehen ist, und
einem um den zumindest einen Aufnahmeabschnitt (19 - 21, 50 - 52) umlaufenden Ringabschnitt (25), an dem die Eingriffsabschnitte (27 - 30, 44 - 49) vorgesehen sind, wobei der Ringabschnitt (25) in ein erstes Ringsegment (26A), das der ersten Halbschale (13) zugeordnet ist, und in ein zweites Ringsegment (26B), das der zweiten Halbschale (14) zugeordnet ist, unterteilt ist, und wobei das erste Ringsegment (26A) in einem geschlossenen Zustand (Z1) der Aufnahmevorrichtung (11) in die zweite Halbschale (14) hineinragt.

2. Aufnahmevorrichtung nach Anspruch 1, wobei der Schlauch (6 - 8) ein Wellschlauch ist und wobei die Eingriffsabschnitte (27 - 30, 44 - 49) dazu eingerichtet sind, formschlüssig in ein Wellental (10) des Schlauchs (6 - 8) einzugreifen.

3. Aufnahmevorrichtung nach Anspruch 1 oder 2, wobei zumindest drei Eingriffsabschnitte (27 - 30, 44 - 49) vorgesehen sind und/oder wobei der erste Teil der Eingriffsabschnitte (27 - 30, 44 - 49) zumindest zwei Eingriffsabschnitte (27 - 29, 44 - 47) und der zweite Teil der Eingriffsabschnitte (27 - 30, 44 - 49) zumindest einen Eingriffsabschnitt (30, 48, 49) umfasst.

4. Aufnahmevorrichtung nach einem der Ansprüche 1 - 3, wobei die Eingriffsabschnitte (27 - 30, 44 - 49) ungleichmäßig oder gleichmäßig über einen Umfang des zumindest einen Aufnahmeabschnitts (19 - 21, 50 - 52) verteilt angeordnet sind.

5. Aufnahmevorrichtung nach einem der Ansprüche 1 - 4, wobei jeder Eingriffsabschnitt (27 - 30, 44 - 49) ein Federelement (31) aufweist, das schräg zu einer Mittelachse (M₁₉ - M₂₁, M₅₀) des zumindest einen Aufnahmeabschnitts (19 - 21, 50 - 52) angeordnet ist.

6. Aufnahmevorrichtung nach Anspruch 5, wobei jeder Eingriffsabschnitt (27 - 30, 44 - 49) ein an dem Federelement (31) vorgesehenes einziges Hakenelement (33) aufweist, das dazu eingerichtet ist, formschlüssig in den Schlauch (6 - 8) einzugreifen.

7. Aufnahmevorrichtung nach einem der Ansprüche 1 - 6, wobei der erste Teil der Eingriffsabschnitte (27 - 30, 44 - 49), der an der ersten Halbschale (13) vorgesehen ist, dazu eingerichtet ist, den Endabschnitt (22 - 24) des Schlauchs (6 - 8) in einem geöffneten Zustand (Z2) der Aufnahmevorrichtung (11) selbstständig zu halten, so dass der Endabschnitt (22 - 24) in dem geöffneten Zustand (Z2) der Aufnahmevorrichtung (11) an dem zumindest einen Aufnahmeabschnitt (19 - 21, 50 - 52) fixiert ist.

8. Aufnahmevorrichtung nach einem der Ansprüche 1 - 7, wobei der Ringabschnitt (25) vollständig um den zumindest einen Aufnahmeabschnitt (19 - 21, 50, 52) herumläuft.

9. Aufnahmevorrichtung nach einem der Ansprüche 1 - 8, wobei die Ringsegmente (26A, 26B) unterschiedliche Umfangswinkel (α, β) aufweisen.

10. Aufnahmevorrichtung nach einem der Ansprüche 1 - 9, wobei das zweite Ringsegment (26B) in dem geschlossenen Zustand (Z1) der Aufnahmevorrichtung (11) in das erste Ringsegment (26A) eingreift.

11. Aufnahmevorrichtung nach einem der Ansprüche 1 - 10, wobei der erste Teil der Eingriffsabschnitte (27 - 30, 44 - 49) an dem ersten Ringsegment (26A) und der zweite Teil der Eingriffsabschnitte (27 - 30, 44 - 49) an dem zweiten Ringsegment (26B) vorgesehen ist.

12. Aufnahmevorrichtung nach einem der Ansprüche 1 - 11, ferner umfassend mehrere Aufnahmeabschnitte (19 - 21, 50 - 52), wobei jedem Aufnahmeabschnitt (19 - 21, 50 - 52) mehrere federelastisch verformbaren Eingriffsabschnitte (27 - 30, 44 - 49) zugeordnet sind, die radial in den jeweiligen Aufnahmeabschnitt (19 - 21, 50 - 52) hineinragen und die dazu eingerichtet sind, formschlüssig in einen dem jeweiligen Aufnahmeabschnitt (19 - 21, 50 - 52) zugeordneten Schlauch (6 - 8) einzugreifen.

13. Aufnahmevorrichtung nach Anspruch 12, wobei Mittelachsen (M₁₉ - M₂₁, M₅₀) der Aufnahmeabschnitte (19 - 21, 50 - 52) parallel zueinander, senkrecht zueinander oder in einem vorbestimmten Winkel (δ) zueinander positioniert sind.

14. Aufnahmevorrichtung nach einem der Ansprüche 1 - 13, wobei die erste Halbschale (13) und die zweite Halbschale (14) mit Hilfe eines Scharniers (15), insbesondere eines Filmscharniers, verschwenkbar miteinander verbunden sind.

15. Kabelbaum (1) mit einem Schlauch (6 - 8) und einer Aufnahmevorrichtung (11) nach einem der Ansprüche 1 - 14.

## Claims

1. A receiving device (11), in particular a distributor, for receiving a tube (6 - 8) for electric cables (2 - 5), having:
a main body (12) having at least one receptacle portion (19 - 21, 50 - 52), in which an end portion (22 - 24) of the tube (6 - 8) at least in portions is receivable, wherein the main body (12) has a first half shell (13) and a second half shell (14) between which the end portion (22 - 24) of the tube (6 - 8) is disposable;
a plurality of engagement portions (27 - 30, 44 - 49) which are deformable in a spring-elastic manner and which protrude radially into the at least one receptacle portion (19 - 21, 50 - 52) and which are specified for engaging in a form-fitting manner in the tube (6 - 8), wherein a first part of the engagement portions (27 - 30, 44 - 49) is provided on the first half shell (13), and a second part of the engagement portions (27 - 30, 44 - 49) is provided on the second half shell (14); and
an annular portion (25) which encircles the at least one receptacle portion (19 - 21, 50 - 52) and on which the engagement portions (27 - 30, 44 - 49) are provided, wherein the annular portion (25) is subdivided into a first annular segment (26A) that is assigned to the first half shell (13) and into a second annular segment (26B) that is assigned to the second half shell (14), and wherein the first annular segment (26A) in a closed state (Z1) of the receiving device (11) protrudes into the second half shell (14).

2. The receiving device as claimed in claim 1, wherein the tube (6 - 8) is a corrugated tube, and wherein the engagement portions (27 - 30, 44 - 49) are specified for engaging in a form-fitting manner into a wave trough (10) of the tube (6 - 8).

3. The receiving device as claimed in claim 1 or 2, wherein at least three engagement portions (27 - 30, 44 - 49) are provided, and/or wherein the first part of the engagement portions (27 - 30, 44 - 49) comprises at least two engagement portions (27 - 29, 44 - 47) and the second part of the engagement portions (27 - 30, 44 - 49) comprises at least one engagement portion (30, 48, 49).

4. The receiving device as claimed in one of claims 1 to 3, wherein the engagement portions (27 - 30, 44 - 49) are disposed so as to be distributed in a non-uniform or uniform manner across a circumference of the at least one receptacle portion (19 - 21, 50 - 52).

5. The receiving device as claimed in one of claims 1 to 4, wherein each engagement portion (27 - 30, 44 - 49) has a spring element (31) which is disposed so as to be oblique to a central axis (M₁₉ - M₂₁, M₅₀) of the at least one receptacle portion (19 - 21, 50 - 52).

6. The receiving device as claimed in claim 5, wherein each engagement portion (27 - 30, 44 - 49) has a single hook element (33) which is provided on the spring element (31) and which is specified for engaging in a form-fitting manner in the tube (6 - 8).

7. The receiving device as claimed in one of claims 1 to 6, wherein the first part of the engagement portions (27 - 30, 44 - 49) that in an opened state (Z2) of the receiving device (11) is provided on the first half shell (13) is specified for holding in a self-reliant manner the end portion (22 - 24) of the tube (6 - 8) such that the end portion (22 - 24) in the opened state (Z2) of the receiving device (11) is fixed to the at least one receptacle portion (19 - 21, 50 - 52).

8. The receiving device as claimed in one of claims 1 to 7, wherein the annular portion (25) completely encircles the at least one receptacle portion (19 - 21, 50, 52).

9. The receiving device as claimed in one of claims 1 to 8, wherein the annular segments (26A, 26B) have dissimilar circumferential angles (α, β).

10. The receiving device as claimed in one of claims 1 to 9, wherein the second annular segment (26B) in the closed state (Z1) of the receiving device (11) engages in the first annular segment (26A).

11. The receiving device as claimed in one of claims 1 to 10, wherein the first part of the engagement portions (27 - 30, 44 - 49) is provided on the first annular segment (26A), and the second part of the engagement portions (27 - 30, 44 - 49) is provided on the second annular segment (26B).

12. The receiving device as claimed in one of claims 1 to 11, furthermore comprising a plurality of receptacle portions (19 - 21, 50 - 52), wherein each receptacle portion (19 - 21, 50 - 52) is assigned a plurality of engagement portions (27 - 30, 44 - 49) which are deformable in a spring-elastic manner and which protrude radially into the respective receptacle portion (19 - 21, 50 - 52) and which are specified for engaging in a form-fitting manner in a tube (6 - 8) that is assigned to the respective receptacle portion (19 - 21, 50 - 52).

13. The receiving device as claimed in claim 12, wherein central axes (M₁₉ - M₂₁, M₅₀) of the receptacle portions (19 - 21, 50 - 52) are positioned so as to be mutually parallel, mutually perpendicular, or at a predetermined mutual angle (δ).

14. The receiving device as claimed in one of claims 1 to 13, wherein the first half shell (13) and the second half shell (14) are pivotably interconnected with the aid of a hinge (15), in particular of an integral hinge.

15. A cable harness (1) having a tube (6 - 8) and a receiving device (11) as claimed in one of claims 1 to 14.

## Revendications

1. Dispositif de réception (11), en particulier distributeur, destiné à recevoir un tuyau (6 - 8) pour câbles électriques (2 - 5), comportant :
un corps de base (12) avec au moins une section de réception (19 - 21, 50 - 52) dans laquelle une section terminale (22 - 24) du tuyau (6 - 8) peut être logée au moins par sections, le corps de base (12) présentant une première demi-coque (13) et une deuxième demi-coque (14), entre lesquelles la section terminale (22 - 24) du tuyau (6 - 8) peut être disposée,
plusieurs sections d'engagement élastiquement déformables (27 - 30, 44 - 49) qui s'engagent radialement dans la ou les section(s) de réception (19 - 21, 50 - 52) et qui sont conçues pour s'engager par complémentarité de forme dans le tuyau (6 - 8), une première partie des sections d'engagement (27 - 30, 44 - 49) étant prévue sur la première demi-coque (13) et une deuxième partie des sections d'engagement (27 - 30, 44 - 49) étant prévue sur la deuxième demi-coque (14), et
une section annulaire (25) s'étendant autour de la ou des section(s) de réception (19 -21, 50 - 52), sur laquelle les sections d'engagement (27 - 30, 44 - 49) sont prévues, la section annulaire (25) étant divisée en un premier segment annulaire (26A) associé à ladite première demi-coque (13) et un second segment annulaire (26B) associé à ladite deuxième demi-coque (14), et le premier segment annulaire (26A) faisant saillie dans ladite deuxième demi-coque (14) dans un état fermé (Z1) dudit dispositif de réception (11).

2. Dispositif de réception selon la revendication 1, dans lequel le tuyau (6 - 8) est un tuyau annelé et dans lequel les sections d'engagement (27 - 30, 44 - 49) sont conçues pour s'engager par complémentarité de forme dans un creux annelé (10) du tuyau (6 - 8).

3. Dispositif de réception selon la revendication 1 ou 2, dans lequel au moins trois sections d'engagement (27 - 30, 44 - 49) sont prévues et/ou dans lequel la première partie des sections d'engagement (27 - 30, 44 - 49) comprend au moins deux sections d'engagement (27 - 29, 44 - 47) et la deuxième partie des sections d'engagement (27 - 30, 44 - 49) comprend au moins une section d'engagement (30, 48, 49).

4. Dispositif de réception selon l'une des revendications 1 à 3, dans lequel les sections d'engagement (27 - 30, 44 - 49) sont disposées et réparties irrégulièrement ou régulièrement au-dessus d'une périphérie de la ou des section(s) de réception (19 - 21, 50 - 52).

5. Dispositif de réception selon l'une revendications 1 à 4, dans lequel chaque section d'engagement (27 - 30, 44 - 49) présente un élément élastique (31), qui est disposé en biais par rapport à un axe central (M₁₉ - M₂₁, M₅₀) de la ou des section(s) de réception (19 - 21, 50 - 52).

6. Dispositif de réception selon la revendication 5, dans lequel chaque section de réception (27 - 30, 44 - 49) présente un unique élément d'accrochage (33) prévu sur l'élément élastique (31) et qui est conçu pour s'engager par complémentarité de forme dans le tuyau (6 - 8).

7. Dispositif de réception selon l'une des revendications 1 à 6, dans lequel la première partie des sections d'engagement (27 - 30, 40 - 49), qui est prévue sur la première demi-coque (13), est conçue pour maintenir la section d'extrémité (22 - 24) du tuyau (6 - 8) indépendante dans un état ouvert (Z2) du dispositif de réception (11), de sorte que la section d'extrémité (22 - 24) soit fixée dans l'état ouvert (Z2) du dispositif de réception (11) sur la ou les sections de réception (19 - 21, 50 - 52).

8. Dispositif de réception selon l'une des revendications 1 à 7, dans lequel la section annulaire (25) entoure complètement la ou les section(s) de réception (19 - 21, 50, 52).

9. Dispositif de réception selon l'une des revendications 1 à 8, dans lequel les éléments annulaires (26A, 26B) présentent des angles circonférentiels (α, β) différents.

10. Dispositif de réception selon l'une des revendications 1 à 9, dans lequel le deuxième segment annulaire (26B) s'engage à l'état fermé (Z1) du dispositif de réception (11) dans le premier segment annulaire (26A).

11. Dispositif de réception selon l'une des revendications 1 à 10, dans lequel la première partie des sections d'engagement (27 - 30, 40 - 49) est prévue sur le premier segment annulaire (26A) et la deuxième partie des sections d'engagement (27 - 30, 44 - 49) est prévue sur le deuxième segment annulaire (26B).

12. Dispositif de réception selon l'une des revendications 1 à 11, comprenant en outre plusieurs sections de réception (19 - 21, 50 - 52), dans lequel, à chaque section de réception (19 - 21, 50 - 52) sont associées plusieurs sections d'engagement déformables élastiquement (27 - 30, 44 - 49), lesquelles font saillie radialement dans la section de réception respective (19 - 21, 50 - 52) et sont conçues pour s'engager par complémentarité de forme dans un tuyau (6 - 8) associé à la section de réception (19 - 21, 50 - 52) respective.

13. Dispositif de réception selon la revendication 12, dans lequel des axes centraux (M₁₉ - M₂₁, M₅₀) des sections de réception (19 - 21, 50 - 52) sont positionnés parallèlement les unes aux autres, perpendiculairement les unes aux autres ou avec un angle prédéterminé (δ) les uns par rapport aux autres.

14. Dispositif de réception selon l'une des revendications 1 à 13, dans lequel la première demi-coque (13) et la deuxième demi-coque (14) sont reliées de manière pivotable l'une à l'autre, à l'aide d'une charnière (15), en particulier d'une charnière formant film.

15. Espace pour câbles (1) ayant un tuyau (6 - 8) et un dispositif de réception (11) selon l'une des revendications 1 à 14.
